Europäisches Patentamt

European Patent Office

Office européen des brevets

(19)

(11) Numéro de publication: **0 053 068
B1**

(12) **FASCICULE DE BREVET EUROPEEN**

(45) Date de publication du fascicule du brevet:
**19.02.86**

(51) Int. Cl.⁴: **G 21 C 17/02,** G 01 F 23/28

(21) Numéro de dépôt: **81401818.0**

(22) Date de dépôt: **19.11.81**

(54) **Dispositif de détection de phase gazeuse dans un réacteur nucléaire.**

(30) Priorité: **20.11.80 FR 8024684**

(43) Date de publication de la demande:
**02.06.82 Bulletin 82/22**

(45) Mention de la délivrance du brevet:
**19.02.86 Bulletin 86/8**

(84) Etats contractants désignés:
**BE CH DE FR GB IT LI SE**

(56) Documents cités:
**FR - A - 1 453 956
FR - A - 1 477 470
FR - A - 2 052 163
FR - A - 2 302 510
FR - A - 2 402 376
US - A - 4 090 407**

(73) Titulaire: **Framatome, Tour Fiat 1 place de la Coupole,
F-92400 Courbevoie (FR)**

(72) Inventeur: **Marini, Jean, Chemin du Bois Martin,
F-78160 Marly le Roi (FR)**
Inventeur: **Weilbacher, Jean-Claude, 10 rue des
Chataigniers, F-95660 Champagne-sur-Oise (FR)**

(74) Mandataire: **Lavoix, Jean et al, c/o Cabinet
Lavoix 2, Place D'Estienne D'Orves, F-75441 Paris
Cedex 09 (FR)**

## Description

L'invention a pour objet un dispositif de détection par ultrasons de la présence d'une phase gazeuse dans la cuve d'un réacteur nucléaire.

En fonctionnement en puissance d'un réacteur nucléaire notamment du type refroidi par eau sous pression, le fluide primaire est maintenu à une pression supérieure à la pression de saturation par l'action d'un pressuriseur dans lequel l'eau et la vapeur sont maintenus en équilibre à la pression désirée. Ce maintien de la pression primaire pendant le fonctionnement en régime permanent et l'absorption des variations de pression durant les régimes transitoires s'effectuent par le jeu des systèmes de chauffage par les cannes chauffantes du pressuriseur ou de condensation par aspersion de fluide relativement froid dans la phase vapeur du pressuriseur.

En fonctionnement normal on ne doit donc trouver de la vapeur dans le circuit primaire que dans la pressuriseur. S'il n'en est pas ainsi et que des bulles de vapeur ou de gaz de fission existent, créant en conséquence une phase gazeuse dans le circuit primaire, cela correspond à un fonctionnement anormal qu'il est nécessaire de détecteur.

En effet, si, du fait d'une surchauffe, des conditions thermodynamiques se modifient et qu'une phase gazeuse est créée, les éléments combustibles seront moins bien refroidis et l'on risque des ruptures de gaines. Ces ruptures de gaines engendreront à leur tour des relachements de produits de fission gazeux qui contribuent également à l'augmentation des gaz dans l'enceinte sous pression et à l'accélération du processus de dégradation entre un fonctionnement normal et un fonctionnement anormal.

Si pour une autre raison résultant de conditions accidentelles, une montée de pression dans le circuit primaire provoque l'ouverture de la vanne de décharge du pressuriseur et que cette dernière ne se ferme pas complètement, il peut se faire que l'eau s'échappe du circuit primaire et que soit ainsi créée accidentellement une bulle de vapeur dans la cuve, par l'effet de la dépressurisation du primaire.

Il est nécessaire dans un tel cas d'accident, que les opérateurs en salle de commande soient avertis dès que possible que le circuit primaire contient une phase vapeur et qu'ils puissent juger en conséquence de la conduite à tenir et des actions à prendre.

De façon à avoir une indication sur le niveau d'eau dans la cuve lors de ces conditions anormales, on a proposé d'instrumenter le couvercle de la cuve à l'aide de dispositifs usuels de détection de niveau d'eau par exemple des émetteurs-récepteurs ultrasoniques. Cependant, cette instrumentation est difficile à réaliser à cause de l'épaisseur du couvercle et doit pouvoir résister aux mêmes conditions physiques que celui-ci en particulier aux hautes valeurs de la pression et de la température.

On connaît, dans le cas d'un réacteur nucléaire à neutrons rapides refroidi par un métal liquide tel que le sodium, un dispositif de mesure de niveau du sodium liquide dans la cuve du réacteur (FR-A-1 477 470). Ce dispositif effectue la mesure de niveau par détermination du temps de propagation dans un guide d'onde, d'une onde ultrasonore qui se réfléchit une première fois sur un réflecteur situé sous le niveau du sodium liquide et une seconde fois sur le niveau du sodium liquide qui est toujours surmonté par une atmosphère gazeuse inerte dont la pression est voisine de la pression atmosphérique, avant de revenir à son point d'émission.

Un tel dispositif ne peut être utilisé dans le cas d'une cuve de réacteur à eau sous pression, pour la détection rapide et sûre d'une phase gazeuse dans cette cuve puisque la mesure du temps de propagation suppose l'existence d'un interface liquide-gaz dans la cuve, ce qui n'est pas le cas des réacteurs à eau sous pression en fonctionnement normal.

D'autre part, pour utiliser le dispositif du brevet FR-A-1 477 470 dans le cas d'une cuve de réacteur à eau sous pression, il faudrait modifier le couvercle de cuve de façon inacceptable pour la sécurité du réacteur.

Enfin, la mesure du temps de propagation d'une onde ultrasonore, avec réflexion sur un interface liquide-gaz, à supposer qu'elle soit possible conduirait à la conception d'un dispositif de détection d'une fiabilité insuffisante.

Le but de l'invention est donc de proposer un dispositif de détection par ultrasons de la présence d'une phase gazeuse dans la cuve d'un réacteur nucléaire refroidi par de l'eau sous pression, cette cuve comportant un couvercle de fermeture traversé par des tubes verticaux dont certains constituent les tubes adaptateurs recevant les mécanismes de commande des barres de contrôle du réacteur et les autres, qui sont fermés par des bouchons, des tubes de réserve ne renfermant pas de mécanisme de commande, la cuve et les tubes constituant un ensemble totalement étanche et complètement rempli d'eau sous pression pendant les périodes de fonctionnement normal du réacteur, dispositif qui soit d'une grande fiabilité et qui ne nécessite pas de modification du couvercle de cuve susceptible de réduire la sécurité du réacteur.

Dans ce but, le dispositif de détection suivant l'invention comporte une pluralité d'émetteurs-récepteurs d'ultrasons fixés sur la face supérieure des bouchons d'une partie au moins des tubes de réserve, à l'extérieur de la cuve et disposés chacun de façon à émettre un faisceau d'ultrasons vers l'intérieur de la cuve, parallèlement à l'axe du tube correspondant qui renferme au moins un réflecteur d'ultrasons disposé de façon à intercepter le faisceau d'ultrasons émis par l'émetteur-récepteur dans une zone voisine du bouchon où se rassemble le gaz éventuellement présent dans la cuve de telle sorte que le réflecteur soit émergé dans le cas où du gaz est effectivement présent.

L'invention sera mieux comprise en se référant aux dessins annexés qui représentent schématiquement plusieurs modes de réalisations.

La figure 1 représente une partie du couvercle d'une cuve de réacteur munie de tubes adaptateurs.

Les figures 2, 3 et 5 sont des vues partielles en coupe axiale de différentes variantes du dispositif selon l'invention.

La figure 4 est une coupe transversale selon IV–IV figure 3.

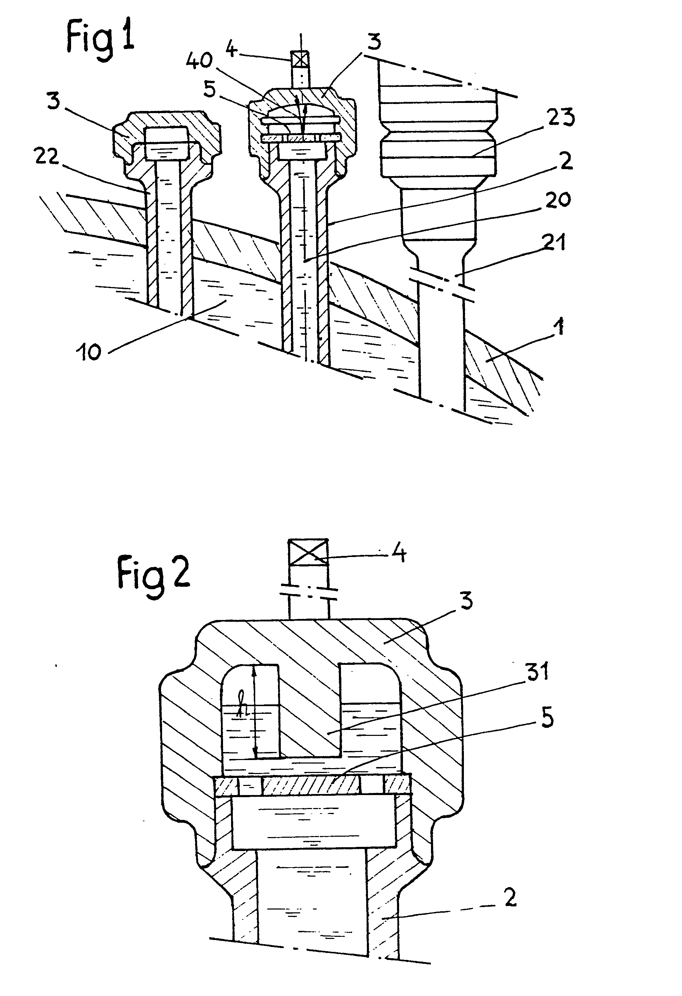

Sur la figure 1, qui correspond au mode de réalisation le plus simple, on a représenté seulement, schématiquement, une partie du couvercle 1 de la cuve d'un réacteur nucléaire qui est traversé par un certain nombre de tubes adaptateurs tels que 2, 21, 22.

Certains de ces tubes tels que 21 sont munis des mécanismes 23 de commandes des barres de contrôle qui sont bien connus et n'ont pas à être représentés.

Les autres tubes tels que 22 sont munis normalement d'un couvercle 3.

Selon l'invention, l'on adapte sur le couvercle 3 de certains tubes adaptateurs tels que (2) un émetteur-récepteur à ultrasons 4 qui émet un faisceau d'ultra-sons 40 parallèle à l'axe 20 du tube vers l'intérieur 10 du réacteur.

A l'intérieur du tube adaptateur 2 est placé un réflecteur 5 qui couvre au moins une partie de la section dudit tube 2. De la sorte, au moins une partie du faisceau 40 est réfléchie vers le récepteur 4 et donne un écho dont l'amplitude peut être mesurée.

En temps normal, l'intérieur 10 de la cuve est rempli d'eau sous pression de même que l'intérieur du tube adaptateur 2 qui communique à sa partie inférieure avec la cuve et a, évidemment, été purgé.

Si, pour une raison ou une autre apparaît une phase gazeuse dans la cuve, il se forme des bulles dont certaines, prisonnières du tube adaptateur 2, se rassemblent à la partie supérieure de celui-ci.

Dès que la quantité de bulles est suffisante pour remplir la partie supérieure du tube adaptateur 2, même sur une hauteur minime, le faisceau d'ultrasons réfléchi par le réflecteur 5 est occulté par ce gaz et il en résulte une diminution de l'écho capté par l'émetteur récepteur 4 et cette variation peut actionner un signal d'alarme. Dans ce cas, l'alerte est donnée pratiquement dès le début de la formation des bulles gazeuses.

Cependant, il est possible que l'on juge inutile de se préoccuper de la formation d'une quantité minimum de bulles et que l'on ne désire donner l'alerte qu'à partir du moment ou une certaine quantité de gaz s'est formée.

Dans ce cas, il peut être intéressant d'utiliser la variante de la figure 2 dans laquelle le bouchon 3 est muni, dans l'axe de l'émetteur récepteur 4, d'un prolongement 31 qui sert de guide d'ondes. Ce prolongement 31 a une hauteur (h) qui correspond à la quantité de gaz estimée normale.

En effet, compte tenu des dimensions de la cuve et du nombre et de la section des tubes adaptateurs sur lesquels ont été montés les émetteurs à ultrasons, on peut déterminer le volume de gaz qui peut être contenu à l'intérieur de chaque tube adaptateur 2 sans qu'il y ait lieu de s'inquiéter et en déduire la hauteur à donner au guide d'ondes 31. Tant qu'une partie de ce guide 31 est immergée dans l'eau, le récepteur 4 enregistre un signal d'écho d'amplitude normale.

En revanche, à partir du moment ou le niveau de l'eau s'abaisse au-dessous du niveau inférieur du guide d'ondes 31, le faisceau réfléchi est occulté comme précédemment, par le gaz et l'amplitude de l'écho diminue.

Cette diminution peut être utilisée pour donner l'alerte par tous moyens connus.

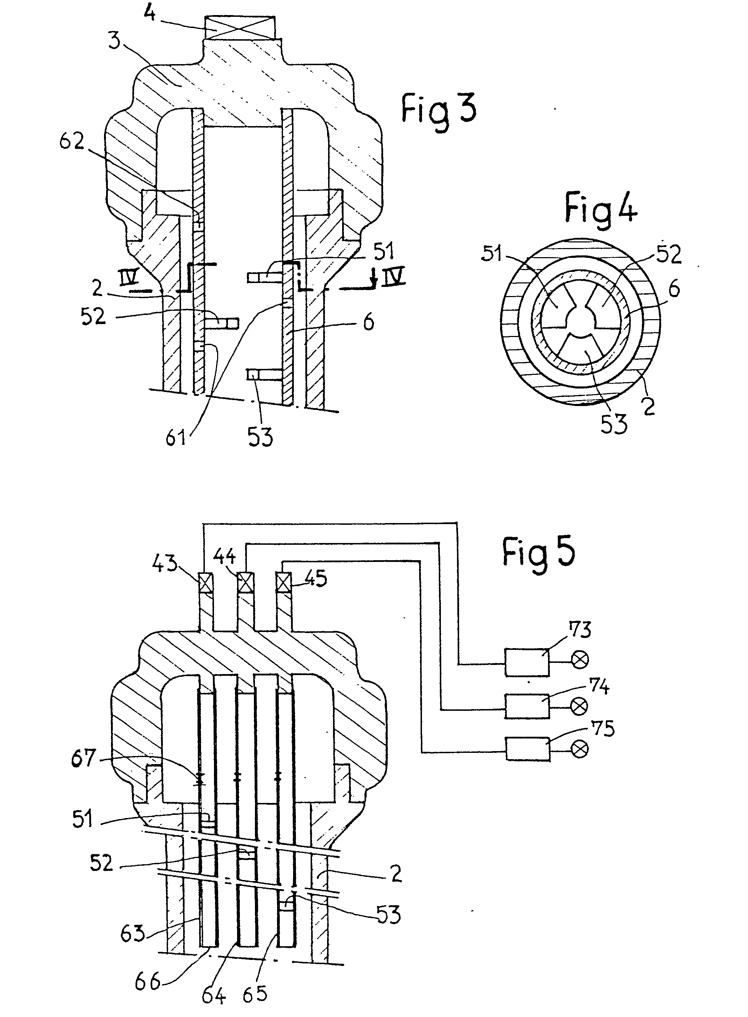

Sur la figure 3 on a représenté une autre variante qui permet non seulement de détecter la présence d'un gaz, mais aussi d'évaluer le niveau d'eau dans la cuve. A cet effet, on a fixé sur la paroi interne d'un tube support 6 plusieurs réflecteurs 51 – 52 – 53 placés à des hauteurs différentes. Comme on l'a indiqué sur la figure 4, les différents réflecteurs sont décalés angulairement de façon que chacun puisse recevoir et renvoyer une partie du faisceau d'ultrasons sans intercepter les faisceaux correspondant aux autres réflecteurs.

Le tube support 6 est en communication avec l'intérieur du tube adaptateur 2 à sa partie inférieure et par l'intermédiaire d'un certain nombre d'orifices 61 dont l'un au moins 62 est placé au-dessus du réflecteur 51 le plus élevé. De la sorte, les gaz qui se rassemblent dans le tube adaptateur 2 peuvent également pénétrer à l'intérieur du tube support 6 de façon à occulter les faisceaux réfléchis.

L'émetteur récepteur 4 fait la somme des signaux réfléchis par les réflecteurs 51 – 52 – 53. L'amplitude de l'écho varie selon que les récepteurs sont immergés ou non ce qui permet de détecter le niveau de l'eau à l'intérieur du tube support 6. En effet, il est possible d'étalonner l'appareil de mesure à l'avance de façon à connaître la variation d'amplitude du signal reçu en fonction du niveau de l'eau.

Dans le mode de réalisation de la figure 5 on utilise également plusieurs réflecteurs de niveaux différents mais chacun est placé à l'intérieur d'un tube support 63 – 64 – 65 différent et à chaque tube support correspond un capteur 43 – 44 – 45 différent.

Les tubes support 64 – 63 – 65 sont munis des réflecteurs 51 – 52 – 53 placés à des hauteurs différentes et ils pénètrent à l'intérieur du tube adaptateur 2 avec lequel ils communiquent par leur partie inférieure 66 et par des orifices 67 ménagés au-dessus des réflecteurs.

Chaque capteur 43 – 44 – 45 est relié à un appareil de mesure 73 – 74 – 75 susceptible de déclencher un signal au moment où le réflecteur 51 – 52 – 53 correspondant cesse d'être immergé.

**Revendications**

1. Dispositif de détection par ultrasons de la présence d'une phase gazeuse dans la cuve d'un réacteur nucléaire refroidi par de l'eau sous pression, cette cuve comportant un couvercle de fermeture (1) traversé par des tubes verticaux (2) dont certains constituent les tubes adaptateurs recevant des mécanismes de commande (23) des barres de contrôle du réacteur et les autres, qui sont fermés par des bouchons (3), des tubes de réserve ne renfermant pas de mécanisme de commande, la cuve (1) et les tubes (2) constituant un ensemble totalement étanche et complètement rempli d'eau sous pression pendant les périodes de fonctionnement normal du réacteur, caractérisé par le fait qu'il comporte une pluralité d'émetteurs-récepteurs d'ultrasons (4) fixés sur la face supérieure des bouchons (3) d'une partie au moins des tubes de réserve (2), à l'extérieur de la cuve et disposés chacun de façon à émettre un faisceau d'ultrasons vers l'intérieur de la cuve, parallèlement à l'axe (20) du tube correspondant qui renferme au moins un réflecteur d'ultrasons (5) disposé de façon à intercepter le faisceau d'ultrasons émis par l'émetteur-récepteur (4) dans une zone voisine du bouchon (3) où se rassemble le gaz éventuellement présent dans la cuve, de telle sorte que le réflecteur (5) soit émergé dans le cas où du gaz est effectivement présent.

2. Dispositif de détection selon la revendication 1, caractérisé par le fait que la face interne du bouchon (3) est munie dans l'axe du faisceau, d'un prolongement (31) formant guide d'ondes et s'étendant sur une hauteur correspondant à une certaine quantité de gaz dont la présence est tolérée à l'intérieur du tube d'adaptation.

3. Dispositif de détection selon la revendication 3, caractérisé par le fait qu'il comprend, à l'intérieur du tube adaptateur (2), une pluralité de réflecteurs (51, 52, 53) placés à des niveaux différents.

4. Dispositif de détection selon la revendication 3, caractérisé par le fait que les réflecteurs (51, 52, 53) sont associés à un récepteur unique (4) faisant la somme des échos reçus de l'ensemble des réflecteurs.

5. Dispositif de détection selon la revendication 4, caractérisé par le fait que les réflecteurs (51, 52, 53) sont fixés sur la paroi interne d'un tube support (6) placé dans l'axe du tube adaptateur (2) et sont décalés angulairement l'un par rapport à l'autre de telle sorte que chacun puisse recevoir et renvoyer un faisceau d'ultrasons sans intercepter les faisceaux correspondant aux autres réflecteurs, ledit tube support (6) étant muni d'orifices de communication (61) avec l'intérieur du tube adaptateur l'un au moins de ces orifices étant placé au-dessus du réflecteur le plus élevé.

6. Dispositif de détection selon la revendication 3, caractérisé par le fait qu'il comprend, pour chaque tube adaptateur (2), une pluralité d'émetteurs récepteurs (43, 44, 45) associés chacun à un réflecteur (51, 52, 53), lesdits réflecteurs étant placés à des niveaux différents.

7. Dispositif de détection selon la revendication 6, caractérisé par le fait que chaque réflecteur est placé dans un tube support (63, 64, 65) fixé sur le bouchon dans l'axe de l'émetteur (43, 44, 45) correspondant et dont la paroi est munie d'au moins deux orifices de communication avec l'intérieur du tube adaptateur, placés l'un (67) au-dessus, et l'autre (66) en dessous du réflecteur.

## Claims

1. Device for detecting the presence of a gaseous phase in the vessel of a nuclear reactor by means of ultrasonic waves, said vessel comprising a closure cover (1) traversed by vertical tubes (2) some of which constitute the adapter tubes receiving reactor control rod actuating mechanisms and the others, which are closed by plugs (3), reserve tubes containing no-actuating mechanisms, the vessel (1) and the tubes (2) constituting a wholly seal-tight and completely filled with pressurized water assembly during the normal operation phases of the reactor, characterised by the fact that it comprises a plurality of ultrasonic emitter-receivers (4) fixed to the upper surface of the plugs (3) of at least a part of the reserve tubes (12), outside the vessel and so placed that each emitter-receiver directs an ultrasonic beam to the inside of the vessel parallel to the axis (20) of the corresponding tube which contains at least one ultrasonic reflector (5) so placed that it intercepts the ultrasonic beam emitted by the emitter-receiver (4) in a zone situated near the plug (3) in which the gas eventually present in the vessel accumulates, so that the reflector (5) is emerged in the case where gas is effectively present.

2. Detection device according to claim 1, characterised by the fact that the inner surface of the plug (3) is provided in the axis of the beam with an extension (31) forming a wave guide and extending over a height corresponding to a certain quantity of gas whose presence is tolerated inside the adapter tube.

3. Detection device according to claim 1, characterised by the fact that it comprises, inside the adapter tube (2), a plurality of reflectors (51, 52, 53) placed at different levels.

4. Detection device according to claim 3, characterised by the fact that the reflectors (51, 52, 53) are associated with a single receiver (4) forming the sum of the echoes received from the group of reflectors.

5. Detection device according to claim 4, characterised by the fact that the reflectors (51, 52, 53) are fixed to the inner wall of a support tube (6) placed in the axis of the adapter tube (2) and are offset angularly with respect to one another so that each can receive and send an ultrasonic beam without intercepting beams corresponding to the other reflectors, said support tube (6) being provided with orifices (61) for communicating with the inside of the adapter tube, one at least of these orifices being placed above the highest reflector.

6. Detection device according to claim 3, characterised by the fact that it comprises, for each adapter tube (2), a plurality of emitter-receivers (43, 44, 45) each associated with a reflector (51, 52, 53), said reflectors being placed at different levels.

7. Detection device according to claim 6, characterised by the fact that each reflector is placed in a support tube (63, 64, 65) fixed to the plug in the axis of the corresponding emitter (43, 44, 45) and of which the wall is provided with at least two orifices communicating with the inside of the adapter tube, one placed above, and the other below the reflector.

## Patentansprüche

1. Vorrichtung zum Erfassen einer Gasphase mittels Ultraschall im Reaktorbehälter eines durch Druckwasser gekühlten Kernreaktors, wobei der Reaktorbehälter einen Verschlussdeckel (1) aufweist, der von vertikalen Rohren (2) durchquert wird, von denen bestimmte Adapterrohre bilden, die Steuermechanismen (23) von Steuerstäben des Reaktors aufnehmen und die übrigen, die durch Verschlüsse (3) abgeschlossen sind, Reserverohre bilden, die keinen Steuermechanismus beinhalten, und wobei der Reaktorbehälter (1) und die Rohre (2) ein vollkommen dichtes Ganzes bilden, das während des Normalbetriebs des Reaktors vollständig mit unter Druck stehendem Wasser gefüllt ist, gekennzeichnet durch mehrere Ultraschall-Sender-Empfängereinheiten (4), die auf der Oberseite der Verschlüsse (3) mindestens eines Teils der Reserverohre (2) befestigt sind, wobei diese Einheiten ausserhalb des Reaktorbehälters liegen und derart angeordnet sind, dass sie ein Ultraschallbündel parallel zur Achse (20) des entsprechenden Rohres ins Innere des Reaktorbehälters emittieren und wobei das entsprechende Rohr mindestens einen Ultraschallreflektor (5) beinhaltet, der das von der Ultraschall-Sender-Empfängereinheit (4) emittierte Ultraschallbündel in einen dem Verschluss (3) benachbarten Bereich umlenkt, wo sich das in dem Reaktorbehälter gegebenenfalls vorhandene Gas sammelt, derart, dass der Reflektor (5) eingetaucht ist, wenn tatsächlich Gas vorhanden ist.

2. Vorrichtung nach Anspruch 1, dadurch gekennzeichnet, dass die Innenseite des Verschlusses (3) auf der Achse des Ultraschallbündels mit einer Verlängerung (31) versehen ist, die eine Wellenführung bildet und sich über eine Höhe erstreckt, die einer bestimmten Gasmenge entspricht, deren Anwesenheit im Inneren des Adaptionsrohrs toleriert wird.

3. Vorrichtung nach Anspruch 1 oder 2, dadurch gekennzeichnet, dass im Inneren des Adapterrohrs (2) mehrere Reflektoren (51, 52, 53) auf verschiedenen Höhen angeordnet sind.

4. Vorrichtung nach Anspruch 3, dadurch gekennzeichnet, dass die Reflektoren (51, 52, 53) einem einzigen Empfänger (4) zugehörig sind, der die Summe der von allen Reflektoren empfangenen Echos bildet.

5. Vorrichtung nach Anspruch 4, dadurch gekennzeichnet, dass die Reflektoren (51, 52, 53) auf der Innenwandung eines Trägerrohrs (6) befestigt sind, das längs der Achse des Adapterrohrs (2) angeordnet ist und die Reflektoren zueinander winkelversetzt sind, derart, dass jeder von ihnen ein Ultraschallbündel empfangen und weiterleiten kann, ohne die entsprechenden Bündel der anderen Reflektoren zu kreuzen, wobei das Trägerrohr (6) mit Verbindungsöffnungen (61) versehen ist, die die Verbindung zum Inneren des Adapterrohrs herstellen, wobei mindestens eine dieser Öffnungen oberhalb des am höchsten gelegenen Reflektors angeordnet ist.

6. Vorrichtung nach Anspruch 3, gekennzeichnet durch mehrere Sender-Empfängereinheiten (43, 44, 45) pro Adapterrohr (2), die jeweils zu einem Reflektor (51, 52, 53) zugehörig sind, wobei die Reflektoren auf verschiedenen Höhen angeordnet sind.

7. Vorrichtung nach Anspruch 6, dadurch gekennzeichnet, dass jeder Reflektor in einem Trägerrohr (63, 64, 65) angeordnet ist, das am Verschluss auf der Achse des entsprechenden Senders (43, 44, 45) angeordnet ist und dessen Wandung mit mindestens zwei Öffnungen zur Verbindung mit dem Inneren des Adapterrohrs versehen ist, wobei eine Öffnung (67) oberhalb und die andere (66) unterhalb des Reflektors angeordnet ist.

Fig 1

Fig 2

Fig 3

Fig 4

Fig 5